# EUROPÄISCHE PATENTSCHRIFT

(11) **EP 2 241 088 B1**
(45) Veröffentlichungstag und Bekanntmachung des Hinweises auf die Patenterteilung: **09.11.2011**
(21) Anmeldenummer: 08862980.3
(22) Anmeldetag: 16.12.2008
(51) Int. Cl.: H04L 29/08

(54) **SYSTEM ZUR ERMITTLUNG UND AUSWERTUNG VON BEGEGNUNGSDATEN**
SYSTEM FOR DETERMINING AND ANALYZING ENCOUNTER DATA
SYSTÈME POUR DÉTERMINER ET ÉVALUER DES DONNÉES DE RENCONTRE

(30) Priorität: 19.12.2007 DE 102007063433; 26.08.2008 DE 102008039665
(43) Veröffentlichungstag der Anmeldung: 20.10.2010
(73) Patentinhaber: aka-aki Networks GmbH, 10969 Berlin (DE)
(72) Erfinder: YORAN, Gabriel, 10405 Berlin (DE); PFISTER, Bastian, 10439 Berlin (DE); HARTMANN, Lukas, F., 10115 Berlin (DE)
(74) Vertreter: Harrison, Robert John
(86) Internationale Anmeldenummer: PCT/DE2008/002099
(87) Internationale Veröffentlichungsnummer: WO 2009/076943

(56) Entgegenhaltungen:
- JP-A- 2002 251 567
- US-A1- 2005 038 876
- US-A1- 2005 138 576
- HAIYUN LUO ET AL: "The Design and Evaluation of Unified Cellular and Ad-Hoc Networks" IEEE TRANSACTIONS ON MOBILE COMPUTING, IEEE SERVICE CENTER, LOS ALAMITOS, CA, US, Bd. 6, Nr. 9, 1. September 2007 (2007-09-01), Seiten 1060-1074, XP011189124 ISSN: 1536-1233
- PENG ZHOU ET AL: "EZCab: A Cab Booking Application Using Short-Range Wireless Communication" PERVASIVE COMPUTING AND COMMUNICATIONS, 2005. PERCOM 2005. THIRD IEEE INTERNATIONAL CONFERENCE ON KAUAI ISLAND, HI, USA 08-12 MARCH 2005, PISCATAWAY, NJ, USA,IEEE, 8. März 2005 (2005-03-08), Seiten 27-38, XP010779638 ISBN: 978-0-7695-2299-9

## Beschreibung

### GEBIET DER ERFINDUNG

Die Erfindung betrifft ein System und ein Verfahren zur Identifizierung von Begegnungen der Nutzer eines Systems, wobei sich der Nutzerkreis aus aktiven und passiven Mitgliedern zusammensetzt.

### HINTERGRUND DER ERFINDUNG

Mit dem Begriff Networking wird allgemein die persönliche oder berufliche Interaktion mit anderen Menschen bezeichnet. Insbesondere in beruflicher Hinsicht hat diese Form der Kontaktpflege in den letzten Jahren eine enorme Bedeutung erfahren. Sogenannte Soziale Online-Systeme (oder Social Networks bzw. Soziale Netzwerkke) sind inzwischen Teil der professionellen Kontaktpflege, die auch in elektronischer Form, insbesondere im Internet, stattfindet.

Bestehende interaktive soziale Netzwerke wollen auf mobilen Endgeräten Präsenz zeigen, doch setzen sie dabei oft nur auf mobile Webseiten. Das Potential mobiler Geräte, nämlich andere Mitglieder jederzeit und überall entdecken zu können, wird dadurch nicht ausgeschöpft.

Eine gegenseitige Erkennung von Mitgliedern mobiler sozialer Onlinesysteme im Sinne existierender Lösungen ist auf die Kommunikation aktiver Komponenten beschränkt. Problematisch bei den derzeit bekannten Lösungen ist die technische Infrastruktur, da der Zugang zum Internet auf dem Handy aufgrund der damit verbundenen Kosten in vielen Regionen der Welt noch nicht mehrheitstauglich ist. Zudem haben nicht alle Mitglieder einer interaktiven Lösung kompatible Handys oder sehen sich im Stande Software auf ihnen zu installieren oder sind willens die intransparenten Gebühren der Mobilfunk-Anbleter zu bezahlen. Lösungen wie GPS sind noch teurer und unpraktikabel (da die Endgeräte selten sind, die GPS-Nutzung viel Strom verbraucht und GPS nicht oder nur eingeschränkt in geschlossenen Räumen funktioniert).

Die JP 2002-251567 beschreibt ein Verfahren zur Übermittlung von Werbung oder Inseraten. Dabei können Inserate über registrierte Nutzer, welche als aktive Nutzer bezeichnet werden, an passive Nutzer weitergeleitet werden. Ein passiver Nutzer hat in diesem System vor Übermittlung seine Zustimmung gegeben. Bei diesem Verfahren sind sich somit die miteinander verbundenen aktiven und passiven Nutzer bekannt.

Die US 2005/0138576 A1 offenbart ein interaktives System zur Integration von Geräten in ein Netzwerk, dabei kann die Integration von so genannten passiven Geräten auch über so genannte aktive Geräte erfolgen. Das in dieser Druckschrift offenbarte System dient ausschließlich der Integration von Geräten in ein Netzwerk.

In der US 2005/0038876 A1 wird ein drahtloses Kommunikationssystem beschrieben, bei dem Teilnehmer direkt miteinander in Verbindung gebracht werden können. Dabei können mobile Geräte von Nutzern mit gleichen Interessen in Echtzeit miteinander verbunden werden. Dieses System beruht auf der direkten Interaktion bzw. der Herstellung einer direkten wechselseitigen Interaktion von Nutzern mit übereinstimmenden privaten oder geschäftlichen Interessen.

### KURZE BESCHREIBUNG DER ERFINDUNG

Ausgehend von dem Stand der Technik besteht die Aufgabe der vorliegenden Erfindung darin, ein Verfahren und ein System zur Verfügung zu stellen, welche die Nachteile der Lösungen aus dem Stand der Technik vermeiden.

Erfindungsgemäß wird bezüglich der Ansprüchen 1 und 15 ein Verfahren, sowie ein Computerprogrammprodukt zur Verfügung gestellt, welches Begegnungen zwischen Mitgliedern ermittelt, obwohl auf dem Endgerät eines so genannten passiven Mitglieds im Moment einer Begegnung kein Computerprogramm (Client) läuft. Aktive Mitglieder des Systems fungieren als Vermittler von Kontakten, auch zwischen passiven Mitgliedern.

Bestandteil eines Systems im Sinne der vorliegenden Erfindung ist ein Registrierungsschritt, bei dem allen Mitgliedern, ob aktiv oder passiv, ein Identifikationsmittel zugeordnet wird. Vorzugsweise wird dazu die Bluetooth-ID eines Mobiltelefons verwendet, da sich ein Handy zumeist an dem gleichen Ort befindet wie ein registrierter Nutzer. So ist eindeutig festgelegt, zu welchem Mitglied das Handy gehört, das die übersandte Bluetooth-ID hat.

Im Sinne der vorliegenden Erfindung werden Nutzer des mobilen Clients als "aktive Mitglieder" bezeichnet. Mitglieder, die lediglich über aktive Mitglieder, nämlich durch die Bluetooth-Interaktion ihres Handys erfasst werden und somit indirekt mit einem Server oder zentralen Speicher verbunden sind, werden im Sinne der Erfindung als "passive Mitglieder" bezeichnet. Aktive Mitglieder sind für das erfindungsgemäße System als Vermittler von Informationen über Begegnungen erforderlich und erfüllen damit die Funktion eines "Retais", welches Begegnungen ermittelt und in Richtung zentralem Speicher leitet und andererseits direkt Informationen über Begegnungen weiterleitet oder vom zentralen Speicher erhaltene Informationen über Begegnungen an Mitglieder weiterleitet. Somit sind die aktiven Mitglieder erforderlich, um Begegnungsinformationen in zwei Richtungen zu vermitteln bzw. weiter zu leiten.

Aber auch passive Mitglieder sind zeitlich und räumlich durchaus relevant: Die zeitlich versetzte Begegnung von einem ersten und zweiten aktiven Mitglied mit demselben passiven Mitglied kann dazu genutzt werden, um eine verpasste Begegnung der beiden aktiven Mitglieder zu erfassen. In diesem Fall wird über ein passives Mitglied eine Begegnungsinformation generiert.

Unter einem "Kontakt" oder einer "Begegnung" im Sinne der vorliegenden Erfindung ist zu verstehen, dass sich zwei Personen zeitgleich in der Nähe zueinander befinden, vorzugsweise in der Nähe eines aktiven Mitglieds, damit die Information über die Begegnung detektiert und weiter geleitet werden kann. Das System und Verfahren der vorliegenden Erfindung dient somit der zeitlichen Erfassung von Begegnungen oder Kontakten, ohne dass Mitglieder sich im gleichen Raum oder der gleichen Örtlichkeit befinden müssen. Es ist aber auch möglich, das vorliegende System für die räumliche Detektion von Begegnungen oder Kontakten zu verwenden. Dazu bedarf es Komponenten, welche geeignet sind Mitglieder zu lokalisieren. Dies ist beispielsweise dadurch möglich, dass die räumliche Ortung eines Mobiltelefons genutzt wird.

Der zentrale Speicher eines erfindungsgemäßen Systems ist vorzugsweise als Server ausgestattet, weshalb im Zusammenhang mit der vorliegenden Erfindung anstatt der Bezeichnung "zentraler Speicher" auch der Begriff "Server" verwendet wir.

Als MoHED (Mobile Hub for Encounter Detection ) wird bei der vorliegenden Erfindung der Client mit der Technologie, die auf dem mobilen Endgerät eines aktiven Mitglieds verwendet wird, bezeichnet, wobei diese Technologie der Detektion und/oder Vermittlung von Begegnungen oder Begegnungsinformationen dient.

### DETAILLIERTE BESCHREIBUNG DER ERFINDUNG

Es wird ein System zur Identifizierung von Begegnungen von Nutzern zur Verfügung gestellt, wobei sich der Nutzerkreis aus aktiven und passiven Mitgliedern zusammensetzt, mit einem zentralen Speicher zur Zuordnung von Identifikationsmitteln zu den aktiven und passiven Mitgliedern in einem Registrierungsschritt und aktiven Mitgliedern, die über einen Client Begegnungen mit anderen Mitgliedern erfassen und/oder direkten Kontakt mit aktiven und/oder passiven Mitgliedern aufnehmen, und passiven Mitgliedern, die über das Identifikationsmittel als Mitglieder des Systems erkennbar sind und aktive Mitglieder Vermittler von Begegnungsinformationen sind, entweder direkt an aktive und/oder passive Mitglieder oder indirekt an verschiedene passive Mitglieder Begegnungsinformationen vermitteln, indem die jeweilige Begegnung eines aktiven Mitglieds mit wenigstens einem ersten und zweiten passiven Mitglied an den zentralen Speicher übermittelt wird und dieser über geeignete Kommunikationsmittel den passiven Mitgliedern ihre Begegnung mitteilt.

Weiterhin kann das Identifikationsmittel mit einem personenbezogenen Profil des jeweiligen Mitglieds verknüpft sein. Zudem kann das Identifikationsmittel einem Kommunikationsmittel, vorzugsweise Telekommunikationsgerät, mobilen Telefon, PDA, Notebook oder Smart-Phone zugeordnet sein. Es ist vorgesehen, dass sich das Identifikationsmittel vorzugsweise in räumlicher Nähe zu dem Mitglied befindet und über eine Identifikationsnummer verfügt. Es ist vorgesehen, dass es sich bei der Identifikationsnummer um eine Bluetooth-Identifikationsnummer, MAGID, Telefonnummer, IMEI oder sonstige numerische, eindeutig zuzuordnende Kennung handelt. Somit kämen beispielsweise auch PKW-Kennzeichen oder ähnliche numerische Kennzeichnungen, die einer Person zugeordnet werden können als Identifikationsmittel in Betracht.

Für die Kommunikationsmittel passiver Mitglieder ist erfindungsgemäß vorgesehen, dass diese über eine Bluetooth-, WLAN oder sonstige drahtlose Verbindung verbindbar sein können und zudem die Kommunikationsmittel aktiver und passiver Mitglieder automatisch Begegnungen mit anderen Mitgliedern registrieren können und aktive Mitglieder automatisch registrierte Begegnungen an den zentralen Speicher übermitteln können.

Erfindungsgemäß ist für den zentralen Speicher ein Vergleichsoperator vorgesehen, der übermittelte Begegnungen in zeitlicher Hinsicht abgleichen kann. Alternativ ist für den Vergleichsoperator vorgesehen, dass übermittelte Begegnungen in räumlicher Hinsicht abgeglichen werden können, wobei eine Kombination von räumlichem und zeitlichem Abgleich ebenfalls vorgesehen sein kann.

In einer erfindungsgemäßen Weiterbildung des erfindungsgemäßen Systems kann ein Abgleich der übermittelten Begegnungen hinsichtlich Übereinstimmungen der personenbezogenen Profile vorgesehen sein sowie das Erstellen von Vergleichsprofilen.

Erfindungsgemäß ist eine Ausgestaltungsform vorgesehen, bei dem ein Auswertungsoperator unterschiedlichen Mitgliedern einen zeitlichen und/oder räumlichen Index zuordnen kann und die Indices hinsichtlich ihrer Übereinstimmung ausgewertet werden können, wobei bei Unterschreiten eines zeitlichen und/oder räumliche Schwellenwerts ein Verbindungsmanager eine Benachrichtigung über die Begegnung an die zugeordneten Mitglieder übermitteln kann. Es ist möglich, dass der Verbindungsmanager eine Begegnung nur nach Auswertung der Vergleichsprofile und Überschreiten eines profilbasierten Schwellenwertes übermitteln kann.

Weiterhin besteht die Möglichkeit, dass ein passives Mitglied, das eine Benachrichtigung über eine Begegnung erhalten hat, über den Verbindungsmanager Zugriff auf Inhalte der Vergleichsprofile der zugeordneten Mitglieder erhalten kann, sofern der Betreiber des Systems dies gestattet, wobei die Gestattung des Betreibers optional erst nach Zahlung einer Gebühr erfolgt. Die Gestattung kann aber auch dann gewährt werden, wenn ein Mitgliedsbeitrag an den Betreiber des Systems entrichtet wird.

Es ist erfindungsgemäß vorgesehen, dass der Zugriff auf das Vergleichsprofil eines zugeordneten Mitglieds über eine SMS und/oder MMS und/oder das Internet erfolgen kann.

Erfindungsgemäß ist vorgesehen, dass der Index-Schwellenwert frei definierbar ist oder mittels einer Fuzzy-Logik Begegnung zweiter Ordnung in zeitlicher und räumlicher Dimension ermittelt wird.

Ein weiterer Gegenstand des Erfindung ist ein Verfahren zur Identifizierung von Begegnungen der Nutzer eines Systems, wobei sich der Nutzkreis aus aktiven und passiven Nutzern zusammensetzt, und in einem Registrierungsschritt ein Identifikationsmittel mit den aktiven und passiven Mitgliedern auf einem zentralen Server verknüpft wird und es nur aktiven Mitgliedern mittels eines Clients ermöglicht wird Begegnungen mit anderen Mitgliedern zu erfassen und/ oder direkten Kontakt aufzunehmen und passive Mitglieder aufgrund der Zuordnung des Identifikationsmittels für aktive Mitglieder als Mitglieder des Systems erkennbar werden und durch aktive Mitglieder entweder direkt an aktive und/oder passive Mitglieder Begegnungsinformationen vermittelt werden, oder indirekt an verschiedene passive Mitglieder Begegnungsinformationen vermittelt werden, indem die jeweilige Begegnung eines aktiven Mitglieds mit wenigstens einem ersten und zweiten passiven Mitglied an den zentralen Server übermittelt wird und über geeignete Kommunikationsmittel den passiven Mitgliedern ihre Begegnung mitgeteilt wird.

In einer Ausgestaltungsform der Erfindung kann ein Identifikationsmittel verwendet werden, das zuvor mit einem personenbezogenen Profil des jeweiligen Mitglieds verknüpft wurde. Es ist vorgesehen, dass das Identifikationsmittel einem Kommunikationsmittel, vorzugsweise einem Telekommunikationsgerät, mobilen Telefon, PDA, Notebook oder Smart-Phone zugeordnet werden kann.

Es ist erfindungsgemäß weiter vorgesehen, dass sich das Identifikationsmittel vorzugsweise in räumlicher Nähe zu dem Mitglied befindet und das Identifikationsmittel eine Identifikationsnummer aufweist.

Weiterhin ist erfindungsgemäß vorgesehen, dass als Identifikationsnummer eine Bluetooth-Identifikationsnummer, MAC-ID, Telefonnummer, IMEI oder sonstige numerische, eindeutig zuzuordnende Kennung verwendet wird. Es kann für die Durchführung des erfindungsgemäßen Verfahrens aber auch jede andere Kennung verwendet werden, die sich einem Mitglied des Nutzerkreises eindeutig zuordnen lässt. Es ist erfindungsgemäß vorgesehen, dass die Kommunikationsmittel passiver Mitglieder über eine Bluetooth-, WLAN oder sonstige drahtlose Verbindung verbunden werden und weiterhin durch die Kommunikationsmittel aktiver und passiver Mitglieder automatisch Begegnungen mit anderen Mitgliedern registriert werden und durch aktive Mitglieder automatisch registrierte Begegnungen an den zentralen Speicher übermittelt werden.

In einer erfindungsgemäßen Weiterbildung ist vorgesehen, dass durch einen Vergleichsoperator des zentralen Speichers übermittelte Begegnungen abgeglichen werden, dabei ist ein Abgleich in zeitlicher und oder räumlicher Hinsicht vorgesehen.

Alternativ können durch den Vergleichsoperator des zentralen Speichers übermittelte Begegnungen hinsichtlich Übereinstimmungen der personenbezogenen Profile abgeglichen und Vergleichsprofile erstellt werden.

Weiter ist erfindungsgemäß vorgesehen, dass durch einen Auswertungsoperator unterschiedlichen Mitgliedern ein zeitlicher und/oder räumlicher Index zugeordnet wird und die Indices hinsichtlich ihrer Übereinstimmung ausgewertet werden, wobei bei Unterschreiten eines zeitlichen und/oder räumlichen Schwellenwerts durch einen Verbindungsmanager eine Benachrichtigung über die Begegnung an die zugeordneten Mitglieder übermittelt wird. Alternativ zur Auswertung in zeitlicher und/oder räumlicher Hinsicht ist vorgesehen, dass durch den Verbindungsmanager eine Begegnung nur nach Auswertung der Vergleichsprofile und Überschreiten eines profilbasierten Schwellenwertes übermittelt wird.

In einer Weiterbildung des erfindungsgemäßen Verfahren ist vorgesehen, dass einem passives Mitglied, das eine Benachrichtigung über eine Begegnung erhalten hat, über den Verbindungsmanager Zugriff auf Inhalte des Vergleichsprofile eines zugeordneten Mitglieder ermöglicht wird, sofern dies durch den Betreiber des Systems gestattet wird. Diese Gestattung des Betreibers kann beispielsweise abhängig sein von der Zahlung einer einmaligen oder regelmäßigen Gebühr in Form eines Mitgliedsbeitrages.

Vorzugsweise wird mittels des erfindungsgemäßen Verfahrens der Zugriff auf das Vergleichsprofil eines zugeordneten Mitglieds über eine SMS und/oder MMS und/oder das Internet vermittelt, dabei kann der Index-Schwellenwert frei definiert werden und/oder mittels einer Fuzzy-Logik Begegnungen zweiter Ordnung in zeitlich und räumlicher Dimension ermittelt werden.

Verwendung eines Systems oder Verfahrens nach einem der vorherigen Ansprüche zur Vermittlung von geschäftlichen Kontakten, insbesondere auf Ausstellungen, Messen oder Tagungen.

Weiterhin ist die Verwendung eines Systems oder Verfahrens gemäß der Erfindung nach zur Vermittlung von privaten Kontakten, insbesondere in Diskotheken, Clubs, Bars, oder auf Festen, Feiern sowie auf sportlichen oder kulturellen Veranstaltungen vorgesehen.

So ist vorgesehen, dass sich beispielsweise Messebesucher vor Messebeginn auf einer Website registrieren und dann über Begegnungen mit anderen Messebesuchern auf der Messe via Client, SMS oder E-Mail informiert werden.

Weiterhin kann ein Aussteller einer Messe Besucher seines Messestandes mit einem erfindungsgemäßen System erfassen, um diese nachträglich zu kontaktieren. Alternativ kann mit dem erfindungsgemäßen System die Anzahl der Besucher gemessen werden.

Im Bereich der privaten Kontakte bietet sich eine Verwendung des erfindungsgemäßen Systems und Verfahrens dazu an, um gemeinsam Freunde oder Menschen mit ähnlichen Interessen kennenzulernen. Dies schließt auch die Verwendung des erfindungsgemäßen Systems zur Suche von Menschen mit gleichen sexuellen Interessen ein.

Auf Veranstaltungen, wie beispielsweise Partys oder auch Feiern, wie beispielsweise Hochzeitsfeiern, kann das erfindungsgemäße System dazu dienen Menschen mit gleichen Interessen eine Begegnung zu ermöglichen, ohne dass diese sich zuvor schon begegnet sind oder kennen.

Selbstverständlich ist das erfindungsgemäße System auch dazu geeignet, um gezielt Matchmaking- /Speeddating-Partys zu veranstalten. Letztlich ist auf jeder Veranstaltung die Anwesenheit von einem aktiven Mitglied ausreichend, um Begegnungen zu vermitteln. Vorteilhafterweise wird die Anwesenheit des aktiven Mitglieds von dem Veranstalter oder Organisator der Veranstaltung arrangiert. So können Sicherheitskräfte oder auch Fotografen mit Geräten ausgestattet werden, die diese zu Vermittlern von Begegnungen oder Kontakten machen.

Ein erfindungsgemäßes System oder Verfahren gemäß der vorstehend beschriebenen Ausführungsformen kann weiterhin für Marketing, Trend- oder Meinungsforschung sowie für die Evaluation von Werbemaßnahmen verwendet werden.

Außenwerber können durch die Verknüpfung einer Bluetooth-ID mit einem Profil, prüfen, welche Passanten welche Plakate/Citylights passiert haben (Werbeerfolgskontrolle).

Für Einzelhändler ergibt sich die Möglichkeit per Bluetooth die Besucher bestimmter Einkaufsstätten zu erfassen (automatisiert oder manuell durch Werbeteams), um diesen Besuchern nachträglich Informationen oder Werbebotschaften auf einer Website, per E-Mail oder auf einem sonstigen Wege zukommen zu lassen.

Marktforscher können die Verbreitung von Trends erkennen und analysieren, in dem nachvollziehbar wird, welche Gruppen von sich räumlich nahen Nutzern welche Sticker (kleine Grafiken mit Kommentar- und Diskussionfunktion, die Mitglieder ihrem Profil "aufkleben" können) angelegt und weiterverbreitet - und damit: welche Themen sie gesetzt - haben.

Des Weiteren ist die Verwendung eines Systems oder Verfahrens zur Ausführung interaktiver Spiele vorgesehen. Auch Bluetooth-Geräte, deren Besitzer ihr Gerät nicht aktiv mit einem Profil verknüpft haben, bekommen, sobald sie erstmals erfasst werden, ein Profil zugewiesen. Dadurch werden diese Geräte wieder erkennbar, was u. a. die Voraussetzung von Alternate Reality Games (ARGs), basierend auf dem erfindungsgemäßen System, ist. In einem solchen ARG werden die Besitzer nicht aktiv mit einem Profil verknüpfter Bluetooth-Geräte zu Non-Player Characters (NPCs), die - ohne ihr Wissen - Informationen und virtuelle Güter transportieren, die von aktiven ARG-Spielem mit MoHED entdeckt und verwendet werden können.

Ein solches ARG könnte die Möglichkeit enthalten, die auf diese Weise sich bewegenden virtuellen Güter zu suchen (Schattsuche), zu sammeln (um sie zu einem größere virtuellen Gut "zusammenzusetzen"), sie mitzunehmen, zu "klauen", zu verstecken oder mit anderen Spielteilnehmern zu tauschen.

Weitere denkbare Spielszenarien sind:
○ Schnitzeljagd (bestimmte Punkte ablaufen)
○ Fangen
○ Schiffe versenken
○ Territorien einnehmen
○ Aktien handeln

Betreiber von Freizeitparks/Themenparks können das erfindungsgemäße System zur Umsetzung der o.g. Spiele (auch kombiniert) einsetzen.

Ein System und Verfahren gemäß der vorliegenden Erfindung ist zudem dazu geeignet die Begegnungen sämtlicher sich momentan oder innerhalb eines definierten Zeitraums, beispielsweise der letzten 5 Minuten, in der Nähe befindlichen aktiven und passiven Nutzer mit anderen aktiven oder passiven Nutzern in einem beliebigen (oder festlegbaren) früheren Zeitraum zu konsolidieren. Dazu muss der Client Zugriff auf den zentralen Speicher nehmen, der die Konsolidierung der Daten vornimmt. Bei dem Zugriff werden Daten von Begegnungen abgefragt. Aus diesen Daten ergibt sich eine Rangliste der Personen, die den Personen, denen man gerade begegnet ist, oft begegnen.

Sortiert man diese Begegnungen nach Häufigkeit, kann das System anzeigen, welche anderen, nicht anwesenden Personen, sich häufig in der Nähe der anwesenden Personen aufhalten - eine unsichtbare Soziosphäre im Sinne eines den Nutzer umgebenden "Raums" sozialer Interessen und Interaktionen wird sichtbar.

Dabei besteht auch die Möglichkeit, dass nicht im System angemeldete Personen, welche ein vom System oder Verfahren verwendetes ldentifikationsmittel verwenden, zur Ermittlung von Begegnungen mit registrierten - sowohl aktiven, als auch passiven Nutzern und/oder unregistrierten Nutzern des Systems zu verwenden. Somit werden in einer Weiterbildung des Systems nicht registrierte Verwender eines erkennbaren Identifikationsmittels eingesetzt, um die Begegnung mit registrierten Nutzern des Systems zu bestimmen. So lassen sich die Begegnungen von registrierten Nutzern ermitteln, aber auch der nicht registrierten Nutzer, welche registrierten Nutzern oft begegnen. Sollten sich diese nicht registrierten Nutzer zu einem späteren Zeitpunkt registrieren, so besteht die Möglichkeit diesen direkt Informationen über (auch bereits vergangene) Begegnungen zukommen zu lassen, da nach der Registrierung dem Identifikationsmittel ein Nutzer zugeordnet werden kann.

Das System oder Verfahren gemäß der Erfindung kann weiterhin auch für die Besetzung offener Arbeitsplätze verwendet werden. Dabei kann Arbeitsuchenden und Arbeitgebern mit offenen Stellen durch ein Abgleich von Profilen der Kontakt vermittelt werden. Dies ist insbesondere auf Messen vorteilhaft, die sich mit der Vermitllung von Arbeitsplätzen befassen.

Auch im Bereich der Sicherheitstechnik ist die Verwendung des erfindungsgemäßen Systems denkbar, so statten beispielsweise Eltern ihre Kinder mit einem mobilen Gerät, wie z. B. einem Bluetooth-fähigen Handy aus. Wenn das Kind dann an einen bestimmten Ort kommt und einem dort platzierten aktiven Mitglied begegnet, wird eine Benachrichtigung an die Erziehungsberechtigten ausgelöst, dass das Kind zum Beispiel zu Hause, im Kindergarten oder in der Schule angekommen ist. Die genannten Einrichtungen können entsprechend als "aktives Mitglied" ausgestattet werden.

Aktive Mitglieder des erfindungsgemäßen Systems können auch Menschenansammlungen erkennen und somit potentiell gefährliche Situationen erkennen und insbesondere zusammen mit GPS-Informationen an entsprechende Sicherheitsbehörden oder -dienste übermitteln. Auch ließe sich theoretisch die Verbreitung von ansteckenden Krankheiten mit dem erfindungsgemäßen System verfolgen.

Letztlich lässt sich das erfindungsgemäße System auch dazu verwenden, um die Begegnung von Haustieren, insbesondere Hunden zu detektieren. So können Tierbesitzer ihre Haustiere als aktive Mitglieder ausstatten, um die Begegnungen ihrer Haustiere mit anderen Tieren zu erfassen.

Die erfindungsgemäßen Vorteile lassen sich wie folgt zusammenfassen: Für den Nutzer stellt sich als besonderer Vorteil dar, dass keine Kosten für das Mitglied, kein Installieren oder Starten von Handyclients, keine Kompatibilitätsprobleme, keine Vorbehalte gegeüber der Internetnutzung auf dem Handy, kein zusätzlicher Stromverbrauch durch aktives Bluetooth-Scanning oder Internet-Verbindung entstehen.

Vorteile für den Anbieter des Dienstes sind, dass keine Ängste von potentiellen Nutzern bei der Anmeldung bestehen und die langfristige Anti-Churn-Wirkung: Selbst wenn die erste Begegnung erst nach Wochen/Monaten passiert, meldet sich der Dienst per SMS, da die Handynummer bei der Erstanmeldung abgefragt wurde.

Letztlich lässt sich die vorliegende Erfindung daher auch als "Begegnungsbroker" bezeichnen: Die "aktiven" Mitglieder des Dienstes vermitteln zwischen den Mitgliedern eines sozialen Netzwerks oder mehrerer verschiedener sozialer Netzwerke. Die Information über auf diese Weise erfasste Begegnungen können an Mitglieder ohne (gerade aktives) Handyprogramm verkauft werden (in Form von Premium-SMS), was auf die erwiesenermaßen auf dem Handy höheren Zahlungsbersitschaft gegenüber klassischer Intemetnetzung abstellt. Gegen Gebühr könnte die so ermittelten Begegnungsinformationen auch an andere soziale Netzwerke ausgeliefert werden.

Die Erfindung basiert auf einem fünfteiligen nähebasierten und optional ortsbasierten sozialen Netzwerk auf Grundlage eines Systems zur Ermittlung und Auswertung von Begegnungsdaten zwischen Einzelpersonen oder Personengruppen.

Ein Bestandteil ist der *Mobile Hub for Encounter Detection* (MoHED), ein System, bei dem aktive Mitglieder des Dienstes die Begegnungen anderer, passiver Mitglieder erfassen und einem Server des Dienstes zur Auswertung zuleiten. So können wenige aktive Mitglieder einen großen Mehrwert für viele passive Nutzer stiften.

Ein erfindungsgemäßes System besteht aus
1. einer optionalen Windows-/Mac-Software zur Verknüpfung von Bluetooth-IDs mobiler Endgeräte mit den Nutzerprofilen von aka-aki-Mitgliedem
2. einem bislang Java-basierten (J2ME), aber nicht darauf beschränkten, mobilen Client, der als aktiver mobiler Detection-Hub auf Handys für anwesende, in Bluetooth-Reichweite befindliche mobile Endgeräte fungiert und auf ca. 80% der verfügbaren Handys lauffähig ist (der aber auch auf anderen Plattformen wie Google Android oder Symbian implementiert werden kann)
3. einem zentralen Server zur Erfassung und fuzzy-logic-Auswertung von Begegnungen, sowie
4. einem optionalen webbasierten User Interface und
5. einem System zur Auslieferung von SMS und MMS.

Die aktiven Nutzer des mobilen Clients (2. Komponente) erfassen die Begegnungen der passiven Nutzer (deren Bluetooth-ID lediglich ihrem Handy zugeordnet ist, 1. Komponente) und übermitteln dieser per UMTS/GPRS etc. an den zentralen Server (3. Komponente). Dort werden die Begegnungen der Mitgliedern aggregiert und per fuzzy logic Begegnungen zweiter Ordnung in zeitlicher und räumlicher Dimension ermittelt: Da die Nutzer des mobilen Clients nicht nur als Endpunkt, sondern gleichzeitig auch als Relais für durchgereichte Begegnungen fungieren: Mitglied A begegnet Mitglied B, das gleichzeitig, kurz vor oder nach der Begegnung Mitglied C begegnet ist - indirekt ist also Mitglied A auch Mitglied C begegnet, was vom Server ermittelt wird. Wird die Begegnung als relevant eingestuft (gemeinsame Interessen, Freunde o.ä.), erhalten beide Mitglieder, sofern sie nicht den mobilen Client nutzen, eine SMS, die sie über die relevante Begegnung informiert (5. Komponente), aber entscheidende Informationen wie Profilname zur Kontaktaufnahme ausspart. Die Antwort auf diese SMS ist kostenpflichtig - erst damit erhält das Mitglied eine MMS mit Portraitfoto, "social graph" und gemeinsamen Interessen mit dem anderen Mitglied. Alternativ kann das Mitglied auch sofort den mobilen Client auf sein Handy laden oder kostenlos die Website des Betreibers besuchen, um sich über die Begegnung zu informieren und Kontakt zu dem anderen Mitglied aufzunehmen (4. Komponente).

Besonderes Merkmal der vorliegenden Erfindung ist die für mobile Anwendungen außergewöhnlich niedrige Anforderung an Hardware (Bluetooth-Handy genügt für die meisten Mitglieder, kein GPS nötig, aber möglich), niedrige Anforderungen an Nutzerkenntnisse (keine zwingende Softwareinstallation auf dem Handy) und niedrige Anforderungen an die Zahlungsbereitschaft (die meisten Nutzer benötigen keine Internet-Verbindung auf ihrem Handy). Die Entwicklung des MoHED ermöglicht durch den Abbau der o.g. Hürden eine präzise Ermittlung von Begegnungen bei gleichzeitig schneller Durchdringung der Zielgruppe und ist damit eine praxistaugliche, marktgerechte Innovation.

So müssen nur wenige Mitglieder einen Handy-Client installieren und Internetkosten auf sich nehmen, wobei die Mehrheit der Mitglieder schlicht die Bluetooth-ID ihres Handy kostenlos mit ihrem Profil verknüpft und somit ohne Kosten oder Kompatibilitätsproblemen an dem System teilnehmen kann.

Die niedrige Einstiegshürde ermöglicht erst die Vermarktung dieser Lösung an andere Social Networks:

Durch die vorliegende Erfindung wird ein allgegenwärtiges soziales Netzwerk, das auch dann funktioniert, wenn die Mitgliedern gar nicht daran denken, zur Verfügung gestellt. Zudem werden Mitglieder dazu animiert die Internetpräsenz des Dienstes bzw. ANbieters zu besuchen, gerne auch eine mobile Version davon. Denkbar wären ggf. sogar Umsätze durch einen revenue share mit dem beteiligten sozialen Netzwerk aus den Erlösen der durch die Premium-SMS ausgelöste Profil-MMS.

Verfahrensschritte für die Durchführung des erfindungsgemäßen Verfahrens bzw. den Betrieb des erfindungsgemäßen Systems sind:
1. Der Betreiber des Systems muss für eine ausreichende Anzahl an aktiven Mitgliedern an potentiellen Begegnungsorten sorgen.
2. Der Betreiber muss eine fuzzy logic zur Ermittlung von Begegnungen entwickeln und die Begegnungs-SMS und Profil-MMS ausliefern.
3. Der Betreiber muss das Verknüpfungsprogramm als White-Label-Version anbieten und an das Partner-Social-Network anpassen.

Voraussetzungen für Partner, die das erfindungsgemäße System nutzen oder anbieten wollen sind:
1. Marketing: Der Partner muss einen Verknüpfer beispielsweise für ein Handy für den Registrierungsschritt bei seinen. Mitgliedern bewerben. Bei dem Verknüpfer handelt es sich optional um eine Software, welche sich die Mitglieder des Partnernetzwerkes herunter laden und damit beispielsweise ihr Handy (ihre Bluetooth-ID) mit ihrem Profil beim Partnemetzwerk verknüpfen können.
2. Technik: Der Server des Partnernetzwerk muss die Mitgliedschaft eines Mitglieds mit beispielsweise einer bestimmen Bluetooth-ID bestätigen und ausgewählte Profildetails an den Server des Systembetriebers liefern, damit er die Begegnung-SMS und die Profil-MMS ausliefern kann.

Im internationalen Vergleich sind die einzig relevanten vergleichbaren Lösungen MobiLuck (Frankreich) und BEDD (Singapur). Erstere benötigt zwingend eine Handy-Software-Installation, um Begegnungen zwischen Mitgliedern zu ermitteln, ebenso wie letztere, die als weitere Einschränkung nur für Symbian-Handys (ca. 7% Marktanteil in Deutschland) verfügbar ist. Keine der bekannten Lösungen ermöglicht die Teilnahme an einem nähebasierten sozialen Netzwerk ohne SoftwareInstallation auf dem mobilen Endgerät.

### BESCHREIBUNG DER FIGUREN

Die Erfindung wird nachfolgend anhand von Ausführungsbeispielen näher erläutert, wobei die Erfindung nicht auf die Ausführungsbeispiele beschränkt ist. Dabei zeigen beispielhaft:
- **Fig. 1**: UML-Sequenzdiagramm "MoHED"
- **Fig. 2**: UML-Sequenzdiagramm "Verknüpfer"

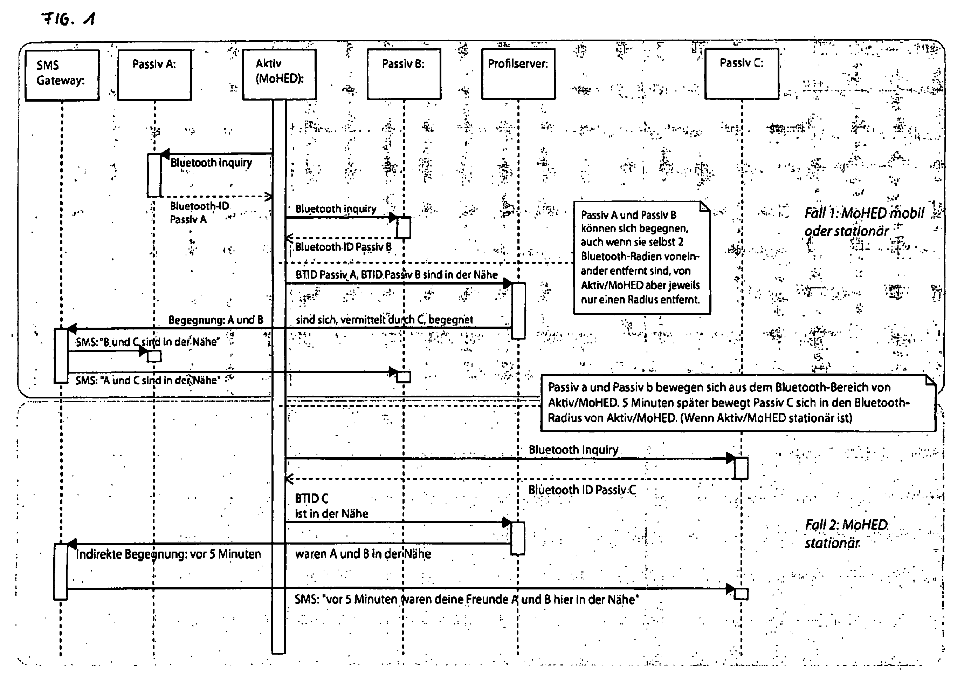

Figur 1 zeigt in einem Ablaufdiagramm beispielhaft die Funktionsweise des Mobile Hub for Encounter Detection (MoHED):

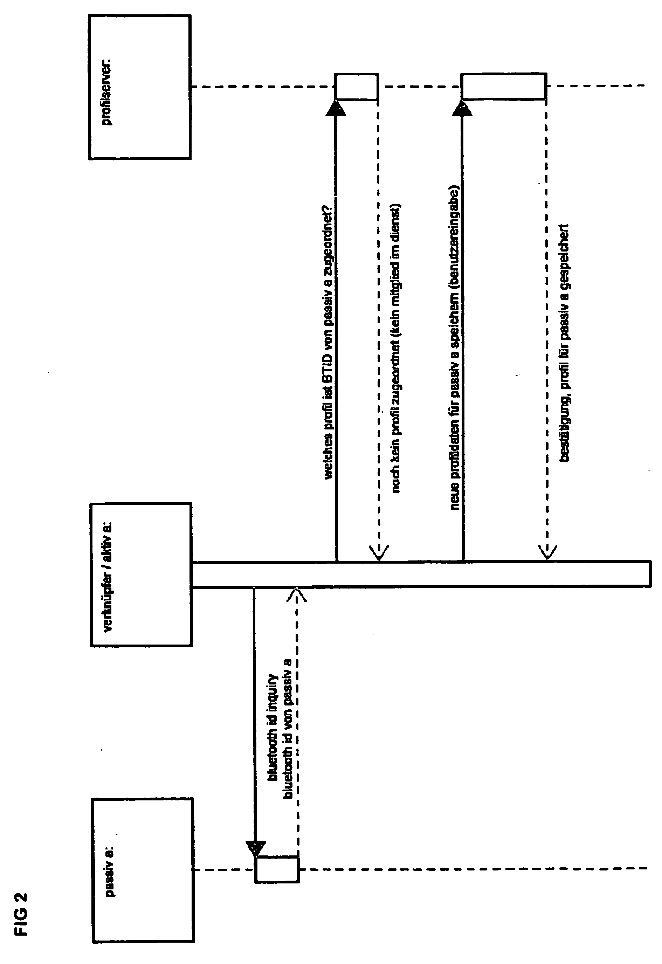

Der Client mit der MoHED-Technologie, der auf dem mobilen Endgerät eines (aktiven) Mitglieds läuft (aktiv (mohed)), ermittelt die Bluetooth-ID eines sich in der Nähe befindlichen passiven Mitglieds (passiv a). Dieses passive Mitglied hat sein mobiles Endgerät mit dem Verknüpfer (siehe Fig. 2) erfaßt und damit mit seinem Profil verknüpft. Alternativ könnte das passive Mitglied "passiv a" auch zu einem beliebigen früheren Zeitpunkt den Client auf seinem mobilen Endgerät benutzt (im Sinne eines mindestens einmaligen erfolgreichen Logins auf dem Profilserver) haben, wodurch ebenfalls eine Verknüpfung mit seinem Profil geschehen ist.

Daraufhin ermittelt das aktive Mitglied (aktiv (mohed)) die Bluetooth-ID eines anderen passiven Mitglieds (passiv b).

Die Information, das zwei passive Mitglieder zeitgleich in der Nähe des aktiven Mitglieds war, wird an den Profilserver (profilserver) übermittelt. So können auch Begegnungen zwischen zwei passiven Mitgliedern vermittelt werden, die nahezu zwei Bluetooth-Signalstärke-Radien voneinander entfernt sind.

Die Information über diese (vermittelte) Begegnung wird vom Profilserver (profilserver) an das SMS-Gateway (sms gateway) übermittelt, das dann die passiven Mitglieder passiv a und passiv b per SMS über die räumliche Nähe des jeweils anderen passiven Mitglieds sowie des aktiven Mitglieds (aktiv (mohed)) informiert.

Das MoHED-System sorgt ebenfalls für eine Benachrichtigung von passiven Mitgliedern, wenn sich nur ein aktives Mitglied in Bluetooth-Reichweite befindet. Eine Beteiligung von mindestens zwei passiven Mitgliedern ist also nicht zwingend notwendig. Weiterhin möglich ist die Vermittlung von Begegnungen unter mehr als zwei passiven Mitgliedern.

Der folgende anschließende Anwendungsfall gilt nur für den Fall, dass der MoHED in ein stationäres System, zum Beispiel eine beleuchtete Plakatwand (Citylight) eingebaut ist und sich nicht bewegt: 5 Minuten nach dem oben dokumentierten Fall entdeckt der Client des aktiven Mitglieds (aktiv (mohed)) eine neue Bluetooth-ID in der Nähe - die des passiven Mitglieds "passiv c" - und übermittelt sie an den Profilserver (profilserver). Da diese neue Begegnung in kurzem zeitlichen Abstand zu der vor kurzem erfaßten Begegnung zwischen aktivem Mitglied, passiv a und passiv b liegt, wird eine SMS an passiv c versandt, die auf die knapp verpaßte Begegnung mit passiv a und passiv b verweist.

Figur 2 zeigt die Funktionsweise des Verknüpfer-Computerprogramms: Das Verknüpfer-Computerprogramm (verknüpfer / aktiv a) wird auf einem Computer gestartet und entdeckt die Bluetooth-IDs mobiler Geräte in der Nähe. Diese Bluetooth-IDs werden mit dem Profilserver (profilserver) abgeglichen: Wenn für eine solche Bluetooth-ID noch keine Profilverknüpfung existiert, ermöglicht der Verknüpfer die Verknüpfung der entsprechenden Bluetooth-ID mit dem Profil. Dazu muss sich das Mitglied mit seinem Benutzemamen und Paßwort autorisieren.

Nach der Autorisierung ist das mobile Gerät bei eingeschaltetem Bluetooth für aktive Mitglieder als Mitglied erkennbar, auch wenn auf dem mobilen Gerät gerade kein Client läuft.

## Patentansprüche

1. Verfahren zur Identifizierung von Begegnungen der Mitglieder eines Systems, wobei sich die Mitglieder aus aktiven und passiven Mitgliedern zusammensetzen, und in einem Registrierungsschritt ein Identifikationsmittel mit den aktiven und passiven Mitgliedern auf einem zentralen Server verknüpft wird und es nur aktiven Mitgliedern mittels eines Clients ermöglicht wird Begegnungen mit anderen Mitgliedern zu erfassen und/ oder direkten Kontakt aufzunehmen und passive Mitglieder aufgrund der Zuordnung des Identifikationsmittels für aktive Mitglieder als Mitglieder des Systems erkennbar werden und durch aktive Mitglieder entweder direkt an aktive und/oder passive Mitglieder Begegnungsinformationen vermittelt werden, oder indirekt an verschiedene passive Mitglieder Begegnungsinformationen vermittelt werden, indem die jeweilige Begegnung eines aktiven Mitglieds mit wenigstens einem ersten und zweiten passiven Mitglied durch das aktive Mitglied an den zentralen Server übermittelt wird und über geeignete Kommunikationsmittel den passiven Mitgliedern ihre Begegnung mitgeteilt wird.

2. Verfahren nach Anspruch 1, wobei ein Identifikationsmittel verwendet wird, das zuvor mit elnem personenbezogenen Profil des jeweiligen Mitglieds verknüpft wurde.

3. Verfahren nach Anspruch 1 oder 2, wobei das Identifikationsmittel einem Kommunikationsmittel, vorzugsweise Telekommunikationsgeräte, mobile Telefone. PDA. Notebook oder Smart-Phone zugeordnet wird.

4. Verfahren nach einem der Ansprüche 1 bis 3, wobei sich das Identifikationsmittel vorzugsweise in räumlicher Nähe zu dem Mitglied befindet und eine Identifikationsnummer aufweist.

5. Verfahren nach einem der Ansprüche 1 bis 4, wobei als Identifikationsnummer eine Bluetooth-Identifikationsnummer, MAC-ID, Telefonnummer, IMEI oder sonstige eindeutig zuzuordnende Kennung verwendet wird.

6. Verfahren nach einem der Ansprüche 1 bis 5, wobei die Kommunikationsmittel passiver Mitglieder über eine Bluelooth-, WLAN oder sonstige drahtlose Verbindung verbunden werden.

7. Verfahren nach einem der Ansprüche 1 bis 6, wobei durch die Kommunikationsmittel aktiver und passiver Mitglieder automatisch Begegnungen mit anderen Mitgliedern registriert werden und durch aktive Mitglieder automatisch registrierte Begegnungen an den zentralen Speicher übermittelt werden.

8. Verfahren nach einem der Ansprüche 1 bis 7, wobei durch einen Vergleichsoperator des zentralen Speichers übermittelte Begegnungen in zeitlicher Hinsicht abgeglichen werden.

9. Verfahren nach einem der Ansprüche 1 bis 8, wobei durch einen Vergleichsoperator des zentralen Speichers übermittelte Begegnungen hinsichtlich Übereinstimmungen der personenbezogenen Profile abgeglichen und Vergleichsprofile erstellt werden.

10. Verfahren nach einem der Ansprüche 1 bis 9, wobei durch einen Auswertungsoperator unterschiedlichen Mitgliedern ein zeitlicher und/oder räumlicher Index zugeordnet wird und die Indices hinsichtlich ihrer Übereinstimmung ausgewertet werden, wobei bei Unterschreiten eines zeitlichen und/oder räumlichen Schwellenwerts durch einen Verbindungsmanager eine Benachrichtigung über die Begegnung an die zugeordneten Mitglieder übermittelt wird.

11. Verfahren nach einem der vorherigen Ansprüche 1 bis 10, wobei durch den Verbindungsmanager eine Begegnung nur nach Auswertung der Vergleichsprofile und Überschreiten eines profilbasierten Schwellenwertes übermittelt wird.

12. Verfahren nach einem der vorherigen Ansprüche 1 bis 11, wobei einem passiven Mitglied, das eine Benachrichtigung über eine Begegnung erhalten hat, über den Verbindungsmanager Zugriff auf Inhalte der Vergleichsprofile zugeordneter Mitglieder ermöglicht wird, sofern dies durch den Betreiber des Systems gestattet wird.

13. Verfahren nach Anspruch 12, wobei der Zugriff auf das Vergleichsprofll eines zugeordneten Mitglieds über eine SMS und/oder MMS und/oder das Internet vermittelt wird.

14. Verfahren nach einem der vorherigen Ansprüche 1 bis 11, wobei der Index-Schwellenwert frei definiert wird oder mittels einer Fuzzy-Logik Begegnung zweiter Ordnung In zeitlich und räumlicher Dimension ermittelt wird.

15. Computerprogrammprodukt, das in einem computertesbaren Medium gespeichert ist und computerlesbare Mittel umfasst, mittels derer ein Computer oder ein Daten verarbeitendes Gerät veranlasst wird, ein Verfahren mit allen Schritten nach einem der vorhergehenden Ansprüche 1 bis 14 durchzuführen, wenn das Programm in dem Gerät abläuft.

## Claims

1. A method for the identification of encounters of members of a system, wherein the members comprise active and passive members and in a registration step an identification mean is linked with the active and passive members on a central server and only active members are enabled to detect via a client encounters with other members and/or to get in direct contact, and passive members are identifiable for active members due to the allocation of the identification mean as members of the system and encounter information are transmitted by active members either directly to active and/or passive members or encounter information are transmitted indirectly to different passive members, by transmitting the respective encounter of an active member with at least a first and second passive member to the central server by the active member, and informing via suitable communication means the passive members about their encounter.

2. The method according to claim 1, wherein an identification mean is used, which was previously linked to a personal profile of the respective member.

3. The method according to claim 1 or 2, wherein the identification mean is allocated to a communication mean, preferably a telecommunication device, mobile phone, PDA, notebook or Smart Phone.

4. The method according to any of the claims 1 to 3, wherein the identification mean is preferably located in spatial vicinity of the member and has an identification number.

5. The method according to any of the claims 1 to 4, wherein as identification number a Bluetooth identification number, MAC-ID, telephone number, IMEI or any other, clearly allocatable identifier is used.

6. The method according to any of the claims 1 to 5, wherein the communication means of passive members are connected via a Bluetooth-, WLAN or other wireless connection.

7. The method according to any of the claims 1 to 6, wherein via the communication means of active and passive members encounters with other members are automatically registered and via active members automatically registered encounters are transmitted to the central server.

8. The method according to any of the claims 1 to 7, wherein via a relational operator of the central server transmitted encounters are aligned in temporal respect.

9. The method according to any of the claims I to 8, wherein via a relational operator of the central server transmitted encounters are aligned with respect to correspondences of the personal profiles and relational profiles are generated.

10. The method according to any of the claims 1 to 9, wherein via an analysis operator a temporal and/or spatial index is allocated to different members and the indexes are analyzed with regard to their correspondence, wherein when falling below a temporal and/or spatial threshold a message about the encounter is transmitted via a connection manager to the allocated members.

11. The method according to any of the preceding claims 1 to 10, wherein via the connection manager an encounter is only transmitted after evaluating the relational profiles and exceeding a profile-based threshold.

12. The method according to any of the preceding claims 1 to 11, wherein a passive member, which has received a message about an encounter, is enabled to get access via the relational manager to the content of the relational profiles of allocated members in case this is allowed by the operator of the system.

13. The method according to claim 12, wherein the access to the relational profile of an allocated member is transmitted via SMS and/or MMS and/or the Internet.

14. The method according to any of the preceding claims 1 to 11, wherein the index threshold is freely defined or is determined by a fuzzy-logic encounter of order two in temporal and spatial dimension.

15. Computer program product, which is stored in a computer readable format and comprises computer readable means by which a computer or a data-processing device is caused to carry out a method with all steps according to any of the preceding claims 1 to 14, if the program is running on the device.

## Revendications

1. Procédé d'identification de rencontres de membres d'un système, dans lequel les membres comprennent des membres actifs et des membres passifs, et dans une étape d'enregistrement un moyen d'identification est relié aux membres actifs et passifs sur un serveur central, et permettant uniquement aux membres actifs de détecter, par l'intermédiaire d'un client, d'entrer en contact direct et/ou des rencontres avec d'autres membres, et des membres passifs sont identifiables pour des membres actifs, grâce à l'allocation du moyen d'identification, en tant que membres du système, et des informations de rencontre sont transmises par des membres actifs soit directement à des membres actifs et/ou passifs, soit des informations de rencontre sont transmises indirectement aux différents membres passifs, en transmettant, au serveur central, par le membre actif, la rencontre respective d'un membre actif avec au moins un premier et deuxième membres passifs, et en informant les éléments passifs, sur leur rencontre, par l'intermédiaire de moyens de communication appropriés.

2. Procédé selon la revendication 1, dans lequel un moyen d'identification est utilisé, qui a été précédemment relié à un profil personnel du membre respectif.

3. Procédé selon la revendication 1 ou 2, dans lequel le moyen d'identification est alloué à un moyen de communication, de préférence à un dispositif de télécommunication, un téléphone mobile, un PDA, un notebook ou un smart phone.

4. Procédé selon l'une quelconque des revendications 1 à 3, dans lequel le moyen d'identification est situé de préférence dans un voisinage spatial du membre et a un numéro d'identification.

5. Procédé selon l'une quelconque des revendications 1 à 4, dans lequel en tant que numéro d'identification, un numéro d'identification Bluetooth, un identifient MAC-ID, un numéro de téléphone, un IMEI/HEM ou n'importe quel autre identifiant allouable clairement est utilisé.

6. Procédé selon l'une quelconque des revendications 1 à 5, dans lequel les moyens de communication des membres passifs sont connectés par l'intermédiaire d'une connexion Bluetooth, WLAN ou une autre connexion sans fil,

7. Procédé selon l'une quelconque des revendications 1 à 6, dans lequel, par l'intermédiaire des moyens de communication des membres actifs et passifs, des rencontres avec d'autres membres sont automatiquement enregistrées, et par l'intermédiaire des membres actifs, les rencontres enregistrées automatiquement sont transmises à la mémoire centrale.

8. Procédé selon l'une quelconque des revendications 1 à 7, dans lequel, par l'intermédiaire d'un opérateur relationnel de la mémoire centrale, les rencontres transmises sont alignées selon une relation temporelle.

9. Procédé selon l'une quelconque des revendications 1 à 8, dans lequel, par l'intermédiaire d'un opérateur relationnel de la mémoire centrale, les rencontres transmises sont alignées par rapport à des correspondances de profils personnels, et des profils relationnels sont engendrés.

10. Procédé selon l'une quelconque des revendications 1 à 9, dans lequel, par l'intermédiaire d'un opérateur d'analyse, un index spatial et/ou temporel est alloué à différents membres, et les indices sont analysés par rapport à leurs correspondances, lors d'une chute sous un seuil spatial et/ou temporel, un message sur la rencontre étant transmis par l'intermédiaire d'un gestionnaire de connexion, aux membres alloués.

11. Procédé selon l'une quelconque des revendications 1 à 10, dans lequel, par l'intermédiaire du gestionnaire de connexion, une rencontre est uniquement transmise après évaluation des profils relationnels, et en excès d'un seuil basé sur le profil.

12. Procédé selon l'une quelconque des revendications 1 à 11, dans lequel un élément passif, qui a reçu un message sur une rencontre, est autorisé à avoir accès, par l'intermédiaire du gestionnaire relationnel, au contenu des profiles relationnels de membres alloués, dans la mesure où ceci est permis par l'opérateur du système.

13. Procédé selon la revendication 12, dans lequel l'accès au profil relationnel d'un membre alloué est transmis par l'intermédiaire d'un SMS et/ou d'un MMS ct/ou d'Internet.

14. Procédé selon l'une quelconque des revendications 1 à 11, dans lequel le seuil d'indice est défini librement ou est déterminé par une rencontre de logique floue/fuzzy d'ordre 2 en dimensions temporelle et spatiale.

15. Produit de programme d'ordinateur, qui est mémorisé dans un format lisible par ordinateur et qui comprend des moyens lisibles par ordinateur par lequel un ordinateur ou un dispositif de traitement de données est amené à réaliser un procédé avec toutes les étapes selon l'une quelconque des revendications 1 à 14, lorsque le programme tourne sur le dispositif.
